(19) Europäisches Patentamt | European Patent Office | Office européen des brevets

(11) **EP 4 099 125 B1**

(12) **EUROPEAN PATENT SPECIFICATION**

(45) Date of publication and mention
of the grant of the patent:
**01.05.2024 Bulletin 2024/18**

(21) Application number: **22174751.2**

(22) Date of filing: **23.05.2022**

(51) International Patent Classification (IPC):
**G05D 1/02** *(2020.01)*

(52) Cooperative Patent Classification (CPC):
**G05D 1/0278; A01B 69/008; G05D 1/0214;
G05D 1/024;** G05D 1/0255

(54) **AUTOMATIC TRAVELING METHOD, AUTOMATIC TRAVELING SYSTEM, AND AUTOMATIC
TRAVELING PROGRAM**

AUTOMATISCHES FAHRVERFAHREN, AUTOMATISCHES FAHRSYSTEM, UND
AUTOMATISCHES FAHRPROGRAMM

PROCÉDÉ, SYSTÈME ET PROGRAMME DE DÉPLACEMENT AUTOMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2021 JP 2021091526**

(43) Date of publication of application:
**07.12.2022 Bulletin 2022/49**

(73) Proprietor: **Yanmar Holdings Co., Ltd.
Osaka-shi, Osaka (JP)**

(72) Inventor: **SUZUKI, Akihiro
Osaka (JP)**

(74) Representative: **Novagraaf International SA
Chemin de l'Echo 3
1213 Onex, Geneva (CH)**

(56) References cited:
**US-A1- 2011 320 085     US-A1- 2018 024 563
US-A1- 2018 343 784**

**Description**

TECHNICAL FIELD

The present invention relates to an automatic traveling method, an automatic traveling system, and an automatic traveling program, for causing a work vehicle to automatically travel according to a target route in a travel region.

BACKGROUND ART

There is known a system for causing a work vehicle to automatically travel according to a previously set target route in a work area such as a farm field or an agricultural farm. Further, in the system, a technique has been proposed for decelerating or stopping the work vehicle when the position deviation (deviation in position) with respect to the target route of the work vehicle exceeds a threshold value (see, for example, Patent Document 1). Another piece of relevant prior art is US 2011/320085 A1.

PRIOR ART DOCUMENT

PATENT DOCUMENT

Patent Document 1: Japanese Unexamined Patent Application Publication No. 2018-041359

SUMMARY OF INVENTION

TECHNICAL PROBLEM

In the conventional system, the threshold value is uniformly set to a fixed value. Accordingly, for example, for a sloped farm field, the position deviation of the work vehicle increases and frequently exceeds the threshold value, so that restricted operations such as deceleration and stop are repeatedly performed. This causes a problem that the work efficiency of the work with the work vehicle is reduced.

An object of the present invention relates to an automatic traveling method, an automatic traveling system, and an automatic traveling program, by which it is possible to improve the work efficiency of a work with a work vehicle traveling automatically in a sloped travel region.

SOLUTION TO PROBLEM

The invention is defined by the appended claims.

ADVANTAGEOUS EFFECTS OF INVENTION

According to the present invention, it is possible to provide an automatic traveling method, an automatic traveling system, and an automatic traveling program, by which it is possible to improve the work efficiency of a work with a work vehicle traveling automatically in a sloped travel region.

BRIEF DESCRIPTION OF DRAWINGS

FIG. 1 is a schematic diagram illustrating an entire configuration of an automatic traveling system according to an embodiment of the present invention.
FIG. 2 is a block diagram illustrating a configuration of the automatic traveling system according to the embodiment of the present invention.
FIG. 3 is an external view obtained when a work vehicle according to the embodiment of the present invention is viewed from a left front side.
FIG. 4A is an external view of a left side face obtained when the work vehicle according to the embodiment of the present invention is viewed from a left side.
FIG. 4B is an external view of a right side face obtained when the work vehicle according to the embodiment of the present invention is viewed from a right side.
FIG. 4C is an external view of a rear face obtained when the work vehicle according to the embodiment of the present invention is viewed from a rear face side.

FIG. 5 is a diagram illustrating an example of a crop row according to the embodiment of the present invention.

FIG. 6 is a diagram illustrating an example of a target route according to the embodiment of the present invention.

FIG. 7A is a diagram for explaining a method of generating a target route according to the embodiment of the present invention.

FIG. 7B is a diagram for explaining a method of generating a target route according to the embodiment of the present invention.

FIG. 8 is a diagram illustrating a travel route of the work vehicle according to the embodiment of the present invention.

FIG. 9 is a diagram illustrating an example of a position deviation and an orientation deviation of the work vehicle according to the embodiment of the present invention.

FIG. 10 is a diagram illustrating an example of a farm field according to the embodiment of the present invention.

FIG. 11 is a diagram illustrating an example of a work route according to the embodiment of the present invention.

FIG. 12 is a table showing an example of position deviation information utilized in the automatic traveling system according to the embodiment of the present invention.

FIG. 13 is a table showing an example of position correction information utilized in the automatic traveling system according to the embodiment of the present invention.

FIG. 14 is a table showing an example of threshold value information utilized in the automatic traveling system according to the embodiment of the present invention.

FIG. 15 is a diagram schematically illustrating a relationship between a position threshold value and a deceleration, according to the embodiment of the present invention.

FIG. 16 is a table showing an example of deceleration information utilized in the automatic traveling system according to the embodiment of the present invention.

FIG. 17 is a flowchart illustrating an example of the procedure of an automatic traveling process executed by the automatic traveling system according to the embodiment of the present invention.

DESCRIPTION OF EMBODIMENTS

The following embodiment is an example in which the present invention is embodied, and does not limit the technical scope of the present invention.

[Automatic Traveling System 1]

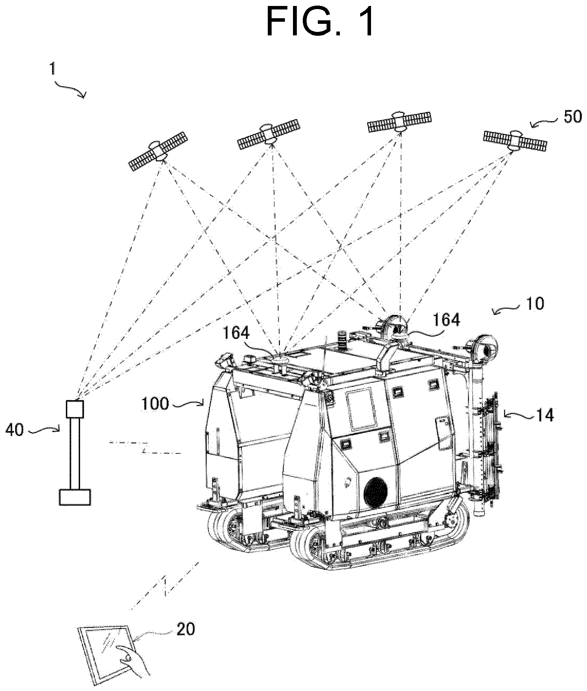

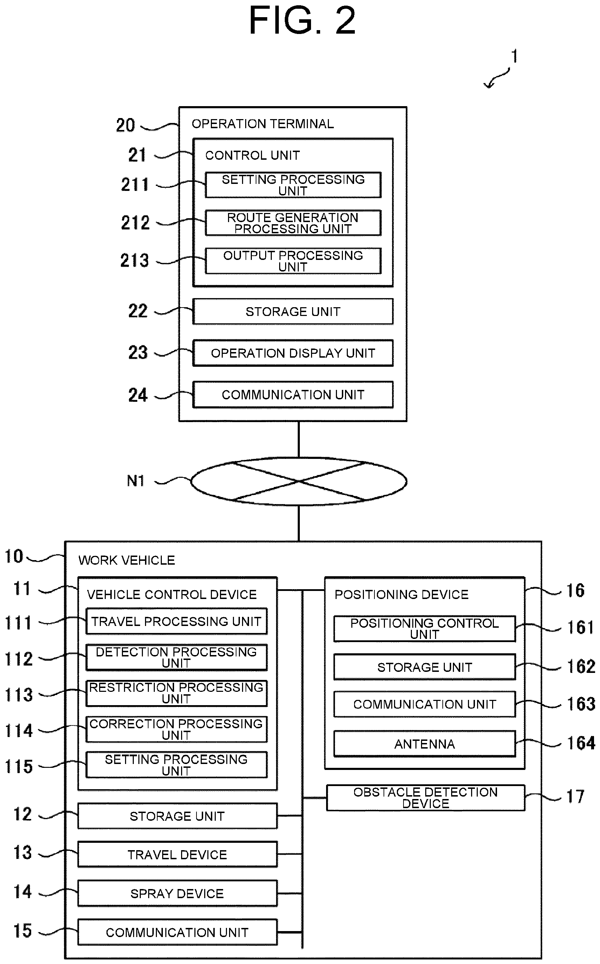

As illustrated in FIGS. 1 and 2, an automatic traveling system 1 according to the embodiment of the present invention includes a work vehicle 10, an operation terminal 20, a base station 40, and a satellite 50. The work vehicle 10 and the operation terminal 20 can communicate with each other via a communication network N1. For example, the work vehicle 10 and the operation terminal 20 can communicate via a mobile phone line network, a packet line network, or a wireless LAN.

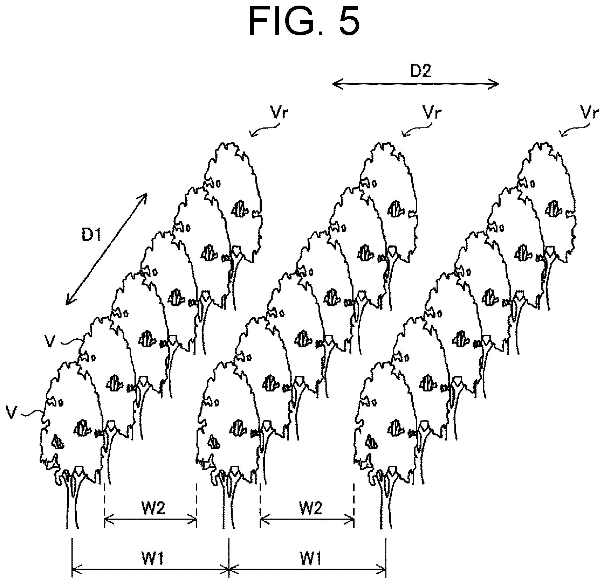

In the present embodiment, a case where the work vehicle 10 is a vehicle for a spraying work of spraying a chemical liquid, water, or the like on crops V (see FIG. 5) planted in a farm field F will be described by way of example. The farm field F is an example of a travel region in the present invention, and the farm field F is, for example, an orchard such as a vineyard or an apple orchard. The crops V are, for example, grape trees. The spraying work is, for example, a work for spraying a spraying material such as a chemical liquid or water on the crops V As another embodiment, the work vehicle 10 may be a vehicle for performing a weeding work, a vehicle for performing a leaf cutting work, or a vehicle for performing a harvesting work.

The crops V are arranged in a plurality of rows at predetermined intervals in the farm field F. Specifically, as illustrated in FIG. 5, a plurality of crops V are planted linearly in a predetermined direction (D1 direction), and form a crop row Vr including the plurality of crops V arranged linearly. FIG. 5 illustrates three crop rows Vr. The crop rows Vr are arranged at a predetermined interval W1 in the row direction (D2 direction). The region (space) of an interval W2 between the adjacent crop rows Vr is a work passage where the work vehicle 10 performs a spraying work on the crops V while traveling in the D1 direction (corresponding to a movement direction in the present invention).

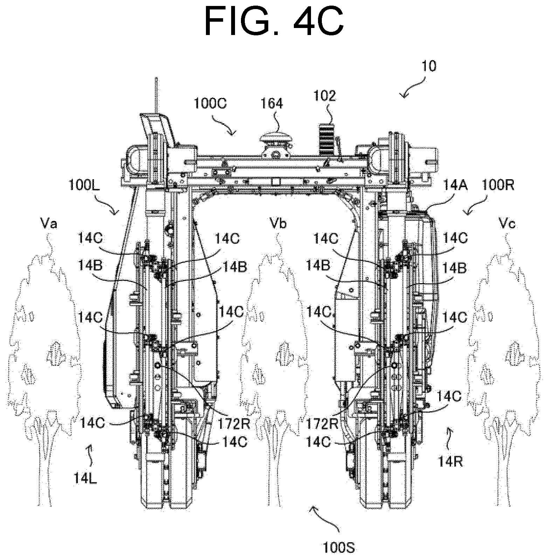

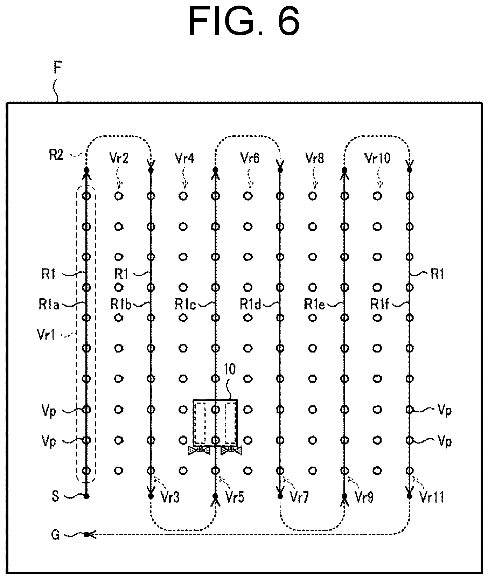

The work vehicle 10 is capable of traveling automatically (autonomously traveling) along a target route R set in advance. For example, as illustrated in FIG. 6, the work vehicle 10 automatically travels from a work start position S to a work end position G along the target route R including a work route R1 (work routes R1a to R1f) and a movement route R2. The work route R1 is a linear route on which the work vehicle 10 performs the spraying work on the crops V, and the movement route R2 is a route on which the work vehicle 10 moves between the crop rows Vr without performing the spraying work. The movement route R2 includes, for example, a turning route and a straight route. In the example illustrated in FIG. 6, the crops V forming crop rows Vr1 to Vr11 are arranged in the farm field F. In FIG. 6, positions (crop positions) where the crops V are planted are represented by "Vp". The work vehicle 10 traveling in the farm field F of FIG. 6 includes a vehicle body 100 having an inverted U-shape (see FIG. 4C), and while traveling in a state of spanning over one of the crop rows Vr, the work vehicle 10 sprays a chemical liquid on the crops V in the one crop row Vr and on the crop row Vr adjacent to the one crop row Vr. For example, as illustrated in FIG. 6, if the work vehicle 10 travels in a state of spanning over the crop row Vr5, a left-side vehicle body (a left-side part 100L) of the work vehicle 10 travels on a work passage between the crop rows Vr4 and Vr5, a right-side vehicle body (a right-side part 100R) of the work vehicle 10 travels on a work passage between the crop rows Vr5 and Vr6, and the work vehicle 10 sprays a chemical liquid on the crops V of the crop rows Vr4, Vr5, and Vr6.

The work vehicle 10 automatically travels in a predetermined row order. For example, the work vehicle 10 firstly travels across the crop row Vr1, next, travels across the crop row Vr3, and next, travels across the crop row Vr5. Thus, the work vehicle 10 automatically travels according to a preset order of the crop rows Vr. The work vehicle 10 may travel on each row in the order of arrangement of the crop rows Vr, or may travel in each of plurality of rows.

The satellite 50 is a positioning satellite configuring a satellite positioning system such as a global navigation satellite system (GNSS), and transmits a GNSS signal (satellite signal). The base station 40 is a reference point (reference station) configuring the satellite positioning system. The base station 40 transmits, to the work vehicle 10, correction information for calculating a current position of the work vehicle 10.

A positioning device 16 mounted in the work vehicle 10 executes a positioning process for calculating a current position (a latitude, a longitude, and an altitude), a current orientation, and the like of the work vehicle 10 by utilizing the GNSS signal transmitted from the satellite 50. Specifically, the positioning device 16 positions the work vehicle 10 by utilizing a real time kinetic (RTK) method or the like for positioning the work vehicle 10, based on positioning information (such as a GNSS signal) received by two receivers (an antenna 164 and the base station 40) and correction information generated by the base station 40. The positioning method is a well-known technique, and thus, detailed description thereof will be omitted.

Each constituent components configuring the automatic traveling system 1 will be described in detail below.

[Work Vehicle 10]

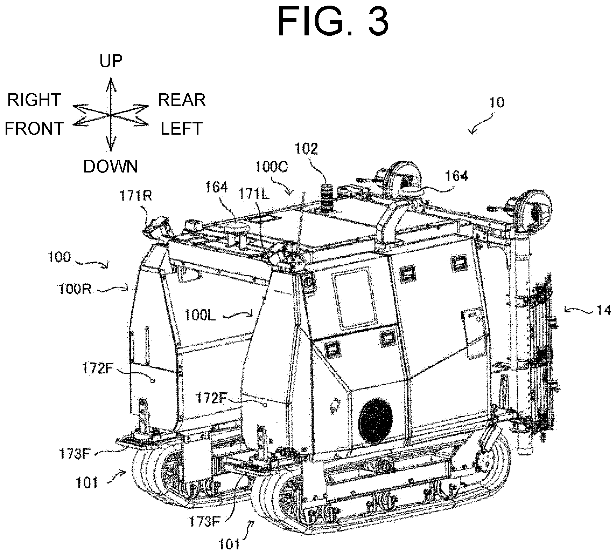

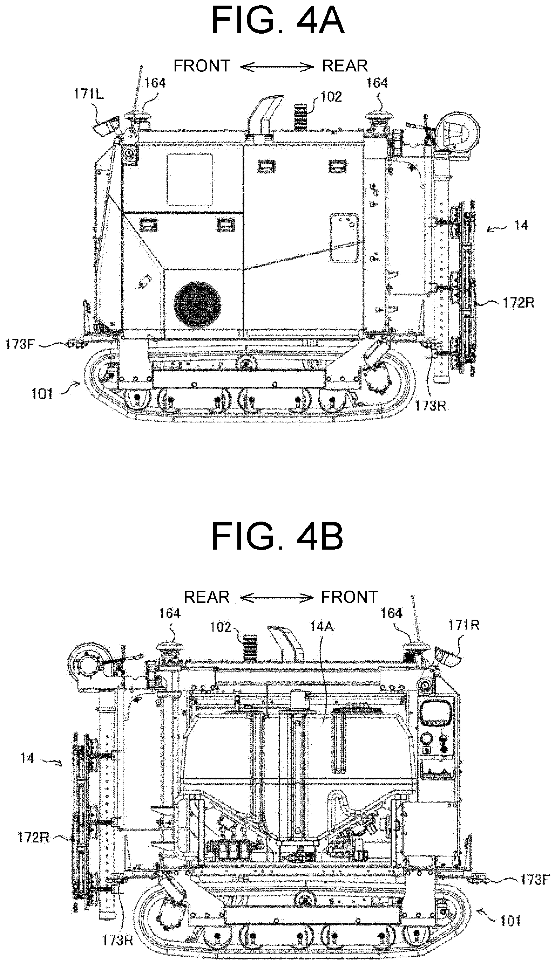

FIG. 3 is an external view obtained when the work vehicle 10 is viewed from a left front side. FIG. 4A is an external view of a left side face obtained when the work vehicle 10 is viewed from a left side, FIG. 4B is an external view of a right side face obtained when the work vehicle 10 is viewed from a right side, and FIG. 4C is an external view of a rear face obtained when the work vehicle 10 is viewed from a rear face side.

As illustrated in FIGS. 1 to 4, the work vehicle 10 includes a vehicle control device 11, a storage unit 12, a travel device 13, a spray device 14, a communication unit 15, a positioning device 16, and an obstacle detection device 17, for example. The vehicle control device 11 is electrically connected to the storage unit 12, the travel device 13, the spray device 14, the positioning device 16, and the obstacle detection device 17, for example. The vehicle control device 11 and the positioning device 16 may be capable of performing wireless communication.

The communication unit 15 is a communication interface for connecting the work vehicle 10 to the communication network N1 in a wired or wireless manner to execute data communication according to a predetermined communication protocol between the work vehicle 10 and an external device such as the operation terminal 20 via the communication network N1.

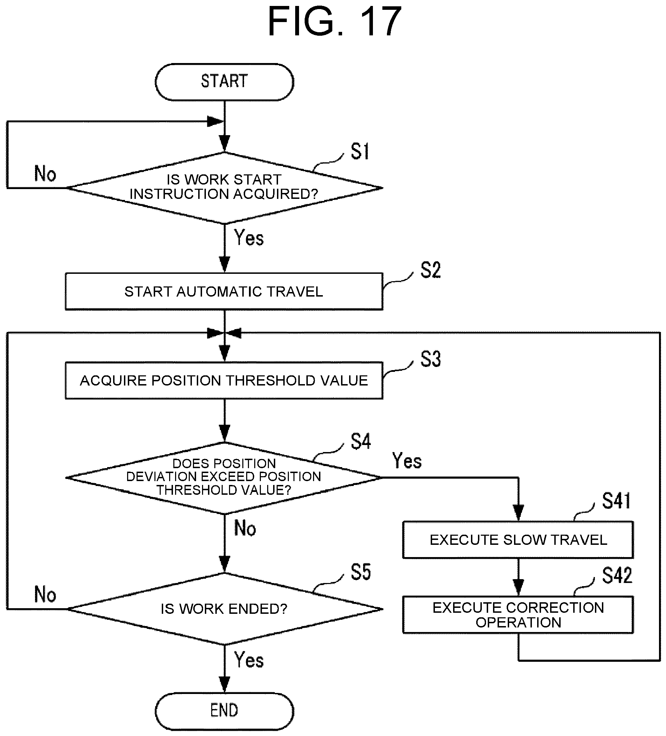

The storage unit 12 is a non-volatile storage unit such as a hard disk drive (HDD) or a solid state drive (SSD) that stores various types of information. The storage unit 12 stores a control program such as an automatic traveling program for causing the vehicle control device 11 to execute an automatic traveling process (see FIG. 17) described later. For example, the automatic traveling program is recorded non-temporarily on a computer-readable recording medium such as a CD or a DVD, and is stored in the storage unit 12 after being read by a predetermined reading device (not illustrated). It is noted that the automatic traveling program may be downloaded from a server (not illustrated) to the work vehicle 10 via the communication network N1 and stored in the storage unit 12. Further, the storage unit 12 stores route data including information on the target route R generated by the operation terminal 20 and threshold value information F3 (described later) for deviations (position deviation and orientation deviation) of the work vehicle 10. For example, the route data is transferred from the operation terminal 20 to the work vehicle 10 and stored in the storage unit 12.

The vehicle control device 11 includes a control device such as a CPU, a ROM, and a RAM. The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (working area) for various types of processes executed by the CPU. The vehicle control device 11 controls the work vehicle 10 by causing the CPU to execute various types of control programs stored in advance in the ROM or the storage unit 12.

The vehicle control device 11 controls the travel of the work vehicle 10. Specifically, as illustrated in FIG. 2, the vehicle control device 11 includes various types of processing units such as a travel processing unit 111, a detection processing unit 112, a restriction processing unit 113, a correction processing unit 114, and a setting processing unit 115. It is noted that the vehicle control device 11 functions as the various types of processing units by causing the CPU to execute various types of processes according to the control programs. Further, some or all of the processing units may be configured by an electronic circuit. It is noted that the control programs may be programs for causing a plurality of processors to function as the processing units.

The travel processing unit 111 causes the work vehicle 10 to automatically travel along the target route R, based on positioning information including a position and an orientation of the work vehicle 10 positioned by the positioning device 16. For example, when the positioning state is a state where RTK positioning is possible and an operator depresses a start button on an operation screen of the operation terminal 20, the operation terminal 20 outputs a work start instruction to the work vehicle 10. When acquiring the work start instruction from the operation terminal 20, the travel processing unit 111 causes the work vehicle 10 to start automatic travel, based on the positioning information of the work vehicle 10 positioned by the positioning device 16. Thus, the work vehicle 10 starts automatic travel along the target route R, and starts the spraying work by the spray device 14 in the work passage.

When acquiring a travel stop instruction from the operation terminal 20, the travel processing unit 111 causes the work vehicle 10 to stop automatic travel. For example, if the operator depresses a stop button on the operation screen of the operation terminal 20, the operation terminal 20 outputs the travel stop instruction to the work vehicle 10. When acquiring the travel stop instruction from the operation terminal 20, the travel processing unit 111 causes the work vehicle 10 to stop automatic travel. Thus, the work vehicle 10 stops the automatic travel and stops the spraying work by the spray device 14. The travel processing unit 111 is an example of the travel processing unit according to the present invention.

Here, the work vehicle 10 includes an inverted U-shaped vehicle body 100 that travels across the crops V (fruit trees) planted side by side in a plurality of rows in the farm field F. As illustrated in FIG. 4C, the vehicle body 100 is formed in an inverted U-shape by the left-side part 100L, the right-side part 100R, and a connection unit 100C connecting the left-side part 100L and the right-side part 100R, and a space 100S that allows the passage of the crops V is secured inside the left-side part 100L, the right-side part 100R, and the connection portion unit 100C.

A crawler 101 is provided at the lower end of each of the left-side part 100L and the right-side part 100R of the vehicle body 100. The left-side part 100L is provided with an engine (not illustrated), a battery (not illustrated), and the like. The right-side part 100R is provided with a storage tank 14A (see FIG. 4B) of the spray device 14 and the like. Thus, constitution components are arranged in a distributed manner in the left-side part 100L and the right-side part 100R of the vehicle body 100, and thus, a balance between the left and right sides and a low center of gravity are achieved in the work vehicle 10. Thus, the work vehicle 10 can stably travel on a slope or the like of the farm field F.

The travel device 13 is a drive unit that causes the work vehicle 10 to travel. The travel device 13 includes the engine, the crawler 101, and the like.

The left and right crawlers 101 are driven by power from the engine in a state where independent transmission is possible by a hydrostatic continuously variable transmission. Thus, when the left and right crawlers 101 are driven at a constant speed in the forward direction, the vehicle body 100 is in a forward-moving state of moving straight in the forward direction, and when the left and right crawlers 101 are driven at a constant speed in the backward direction, the vehicle body 100 is in a backward-moving state of moving straight in the backward direction. When the left and right crawlers 101 are driven at an irregular speed in the forward direction, the vehicle body 100 is in a forward-moving and turning state where the vehicle body 100 moves forward while turning, and when the left and right crawlers 101 are driven at an irregular speed in the backward direction, the vehicle body 100 is in a backward-moving and turning state where the vehicle body 100 moves backward while turning. When one of the left and right crawlers 101 is stopped in drive while the other one of the crawlers 101 is driven, the vehicle body 100 is in a pivot turning (pivot turn) state, and when the left and right crawlers 101 are driven at a constant speed in the forward direction and in the backward direction, the vehicle body 100 is in a spin turning (neutral turn) state. When the left and right crawlers 101 are stopped in drive, the vehicle body 100 stops traveling. The left and right crawlers 101 may have an electrically driven configuration in which the left and right crawlers 101 are driven by an electric motor.

As illustrated in FIG. 4C, the spray device 14 includes the storage tank 14A that stores chemical liquids or the like, a spraying pump (not illustrated) that pumps chemical liquids or the like, an electric spraying motor (not illustrated) that drives the spraying pump, two spraying pipes 14B installed in parallel on each of the left and right in a vertical position at the rear of the vehicle body 100, a total of 12 spraying nozzles 14C in which three nozzles are installed on each of the spraying pipes 14B, an electronically controlled valve unit (not illustrated) that changes a spraying amount and a spraying pattern of a chemical liquid, a plurality of spraying pipes (not illustrated) that connects these components, and the like.

Each of the spraying nozzles 14C is changeably attached to the corresponding spraying pipe 14B to be vertically repositionable. Thereby, each of the spraying nozzles 14C can change a distance from an adjacent spraying nozzle 14C and a height position with respect to the spraying pipe 14B according to the targets (crops V) to be sprayed. Further, each of the spraying nozzles 14C is attached so that the height position and the left-right position with respect to the vehicle body 100 can be changed according to the targets to be sprayed.

In the spray device 14, the number of the spraying nozzles 14C provided in each of the spraying pipes 14B can be variously changed according to the type of crops V, the length of each of the spraying pipes 14B, and the like.

As illustrated in FIG. 4C, three spraying nozzles 14C provided on the leftmost spraying pipe 14B out of the plurality of spraying nozzles 14C spray the chemical liquid to the left toward a crop Va located on the leftward and outward of the vehicle body 100. Three spraying nozzles 14C provided on the left inner spraying pipe 14B adjacent to the leftmost spraying pipe 14B out of the plurality of spraying nozzles 14C spray the chemical liquid to the right toward a crop Vb located in the left and right central space 100S of the vehicle body 100. Three spraying nozzles 14C provided on the rightmost spraying pipe 14B out of the plurality of spraying nozzles 14C spray the chemical liquid to the right toward a crop Vc located on the rightward and outward of the vehicle body 100. Three spraying nozzles 14C provided on the right inner spraying pipe 14B adjacent to the rightmost spraying pipe 14B out of the plurality of spraying nozzles 14C spray the chemical liquid to the left toward the crop Vb located in the space 100S.

With the above configuration, in the spray device 14, the two spraying pipes 14B and the six spraying nozzles 14C provided on the left-side part 100L of the vehicle body 100 function as a left spraying unit 14L. Further, the two spraying pipes 14B and the six spraying nozzles 14C provided on the right-side part 100R of the vehicle body 100 function as a right spray portion 14R. The left and right spraying units 14L and 14R are provided with a horizontal interval allowing for passage of the crop Vb (the space 100S) between the left and right spraying units 14L and 14R in a state where the left and right spraying units 14L and 14R can spray the chemical liquid in the left-right direction on the rear of the vehicle body 100.

In the spray device 14, the spraying patterns of the spraying units 14L and 14R include a four-way spraying pattern in which each of the spraying units 14L and 14R sprays the chemical liquid in both the left and right directions, and a direction-restricted spraying pattern in which the spraying direction of the spraying units 14L and 14R is restricted. The direction-restricted spraying pattern includes a left-side three-way spraying pattern in which the spraying unit 14L sprays the chemical liquid in both the left and right directions and the spraying unit 14R sprays the chemical liquid only in the left direction, and a right-side three-way spraying pattern in which the spraying unit 14L sprays the chemical liquid only in the right direction and the spraying unit 14R sprays the chemical liquid in both the left and right directions, a two-way spraying pattern in which the spraying unit 14L sprays the chemical liquid only in the right direction and the spraying unit 14R sprays the chemical liquid only in the left direction, a left-side unidirectional spraying pattern in which the spraying unit 14L sprays the chemical liquid only in the left direction and the spraying unit 14R does not spray the chemical liquid, and a right-side unidirectional spraying pattern in which the spraying unit 14R sprays the chemical liquid only in the right direction and the spraying unit 14L does not spray the chemical liquid.

The vehicle body 100 is equipped with an automatic travel control unit that causes the vehicle body 100 to automatically travel according to the target route R of the farm field F, based on the positioning information and the like acquired from the positioning device 16, an engine control unit that controls the engine, a hydro-static transmission (HST) control unit that controls the hydrostatic continuously variable transmission, and a work device control unit that controls a work device such as the spray device 14. Each of the control units is constructed by an electronic control unit equipped with a microcontroller and the like, various types of information and control programs stored in a non-volatile memory (for example, an EEPROM such as a flash memory) of the microcontroller, and the like. The various types of information stored in the non-volatile memory may include the target route R generated in advance or the like. In the present embodiment, the control units are collectively referred to as the "vehicle control device 11" (see FIG. 2).

The positioning device 16 is a communication equipment including a positioning control unit 161, a storage unit 162, a communication unit 163, the antenna 164, and the like. The antenna 164 is provided at the front and rear parts of a roof (the connection unit 100C) of the vehicle body 100 (see FIG. 3). The roof of the vehicle body 100 is also provided with an indication lamp 102 or the like for indicating a travel state of the work vehicle 10 (see FIG. 3). The battery is connected to the positioning device 16, so that the positioning device 16 can operate even when the engine is stopped.

The communication unit 163 is a communication interface for connecting the positioning device 16 to the communication network N1 in a wired or wireless manner to execute data communication, according to a predetermined communication protocol, between the communication unit 163 and an external device such as the base station 40 via the communication network N1.

The antenna 164 is an antenna that receives radio waves (GNSS signals) transmitted from satellites. Since the antenna 164 is provided at the front and rear parts of the work vehicle 10, the current position and the current orientation of the work vehicle 10 can be accurately positioned.

The positioning control unit 161 is a computer system including one or more processors and a storage memory such as a non-volatile memory and a RAM. The storage unit 162 is a control program for causing the positioning control unit 161 to execute the positioning process, and a non-volatile memory for storing data such as positioning information and movement information. The positioning control unit 161 positions the current position and the current orientation of the work vehicle 10 by a predetermined positioning method (RTK method or the like) based on the GNSS signal received from the satellite 50 by the antenna 164.

The obstacle detection device 17 includes a LiDAR sensor 171L provided on the front and left side of the vehicle body 100 and a LiDAR sensor 171R provided on the front and right side of the vehicle body 100 (see FIG. 3). Each LiDAR sensor measures a distance from the LiDAR sensor to each ranging point (measurement target) in the measurement range by a time of flight (TOF) method for measuring the distance to the ranging point, based on a round-trip time required by laser light input to the LiDAR sensor to reach the ranging point and return to the LiDAR sensor, for example.

The LiDAR sensor 171L has a predetermined range on the front and left side of the vehicle body 100 set as a measurement range, and the LiDAR sensor 171R has a predetermined range on the front and right side of the vehicle body 100 set as a measurement range. Each LiDAR sensor transmits measurement information such as the measured distance to each ranging point and the scanning angle (coordinates) for each ranging point to the vehicle control device 11.

Further, the obstacle detection device 17 includes left and right ultrasonic sensors 172F (see FIG. 3) provided on the front side of the vehicle body 100 and left and right ultrasonic sensors 172R (see FIGS. 4A to 4C) provided on the rear side of the vehicle body 100. Each ultrasonic sensor measures a distance from the ultrasonic sensor to a measurement target by the TOF method for measuring a distance to a ranging point, based on a round-trip time from when an ultrasonic wave is transmitted by the ultrasonic sensor to reach the ranging point to when the ultrasonic wave returns.

The ultrasonic sensor 172F on the front and left side has a predetermined range on the front and left side of the vehicle body 100 set as the measurement range, the ultrasonic sensor 172F on the front and right side has the predetermined range on the front and right side of the vehicle body 100 set as the measurement range, the ultrasonic sensor 172R on the rear and left side has a predetermined range on the rear and left side of the vehicle body 100 set as the measurement range, and the ultrasonic sensor 172R on the rear and right side has the predetermined range on the rear and right side of the vehicle body 100 set as the measurement range. Each ultrasonic sensor transmits measurement information including the distance to the measurement target and the direction of the object to be measured to the vehicle control device 11.

Further, the obstacle detection device 17 includes left and right contact sensors 173F (see FIG. 3) provided on the front side of the vehicle body 100 and left and right contact sensors 173R (see FIGS. 4A and 4B) provided on the rear side of the vehicle body 100. The contact sensor 173F on the front side of the vehicle body 100 detects an obstacle when an obstacle comes into contact with the contact sensor 173F. The spray device 14 is provided in front of the contact sensor 173R on the rear side of the vehicle body 100 (rear side of the work vehicle 10), and when an obstacle comes into contact with the spray device 14, the contact sensor 173R detects the obstacle by the spray device 14 moving to the rear (toward the front side of the work vehicle 10). Each contact sensor transmits a detection signal to the vehicle control device 11 when an obstacle is detected.

The vehicle control device 11 executes an avoidance process for avoiding an obstacle when the work vehicle 10 may collide with the obstacle based on the measurement information about the obstacle acquired from the obstacle detection device 17.

Further, the vehicle control device 11 detects a position deviation and an orientation deviation of the work vehicle 10 and performs an operation (restricted operation and correction operation) to avoid a collision with any of the crop rows Vr.

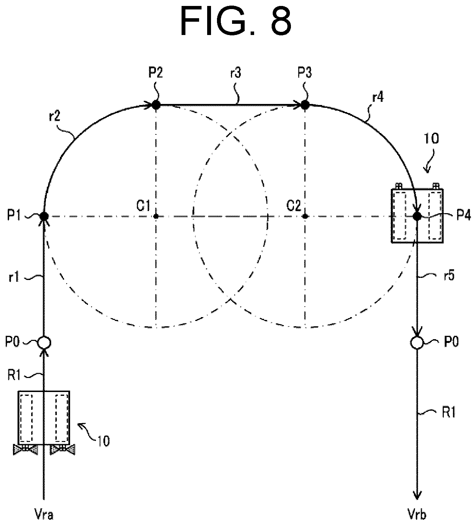

For example, the travel processing unit 111 moves the work vehicle 10 from the work route R1 of the crop row Vra to the work route R1 of the crop row Vrb according to the target route R illustrated in FIG. 8. When reaching the end point P0 of the crop row Vra, the work vehicle 10 stops the spraying, travels straight on a straight route r1, and starts turning at a turning start position P1. When starting the turning, the work vehicle 10 moves from a turning route r2, then a straight route r3, to a turning route r4, travels straight from a turn end position P4 to a straight route r5, and moves to an end point P0 of a crop row Vrb being a next work route R1 to resume spraying. In FIG. 8, reference symbol C1 indicates a turning center of the turning route r2, and reference symbol C2 indicates a turning center of the turning route r4. Turning radii of the turning routes r2 and r4 are the same.

The detection processing unit 112 of the vehicle control device 11 detects the position deviation and the orientation deviation of the work vehicle 10 traveling automatically. Specifically, the detection processing unit 112 detects the position deviation and the orientation deviation of the work vehicle 10 with respect to the target route R, based on the positioning information (a current position and a current orientation) from the positioning device 16.

The restriction processing unit 113 of the vehicle control device 11 determines whether the position deviation detected by the detection processing unit 112 exceeds a previously set threshold value (position threshold value). Then, when the position deviation exceeds the position threshold value, the restriction processing unit 113 executes a restricted operation (traveling slowly, stopping, etc.) to restrict the travel operation of the work vehicle 10. Further, the restriction processing unit 113 determines whether the orientation deviation detected by the detection processing unit 112 exceeds a previously set threshold value (orientation threshold value). Then, when the orientation deviation exceeds the orientation threshold value, the restriction processing unit 113 executes a restricted operation for restricting the travel operation (traveling slowly, stopping, etc.) of the work vehicle 10. The position threshold value and the orientation threshold value are set previously in, for example, the operation terminal 20. The position threshold value is an example of a threshold value in the present invention. The restriction processing unit 113 is an example of a restriction processing unit in the present invention. The restricted operation will be described in detail later.

When the position deviation detected by the detection processing unit 112 exceeds the position threshold value, the correction processing unit 114 of the vehicle control device 11 executes a correction operation to correct the position deviation. Further, when the orientation deviation detected by the detection processing unit 112 exceeds the orientation threshold value, the correction processing unit 114 executes a correction operation to correct the orientation deviation. It is noted that the correction processing unit 114 executes the correction operation after the restricted operation is executed by the restriction processing unit 113.

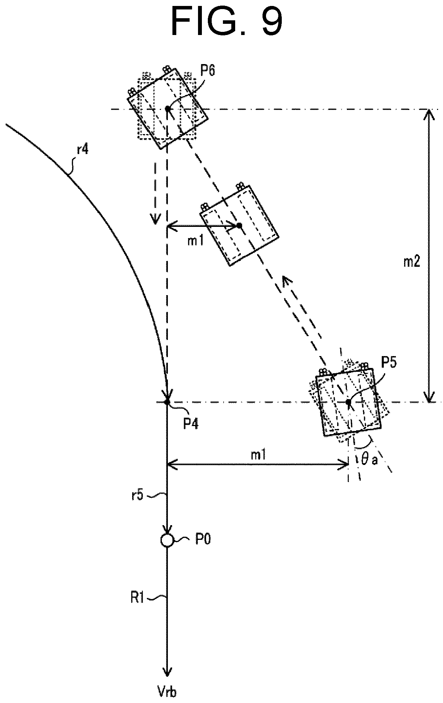

An example of the correction operation will now be described with reference to FIG. 9. FIG. 9 illustrates a part of the target route R including the turning route r4 and the straight route r5, which are illustrated in FIG. 8. For example, when the work vehicle 10 deviates from the turning route r4 of the target route R and the position deviation exceeds the position threshold value, the work vehicle 10 travels slowly and then stops at a position P5 which is at a distance of m1 (position deviation) from the target turning end position P4. At the position P5, when the position deviation m1 exceeds the position threshold value and the orientation deviation θa exceeds the orientation threshold value, the correction processing unit 114 executes the following correction operation. Firstly, the correction processing unit 114 causes the work vehicle 10 to spin-turn (neutral turn) at the position P5 until the orientation deviation θa of the work vehicle 10 with respect to the direction of a straight line connecting the position P5 and a position P6 on the extended line of the straight route r5 is equal to or less than the orientation threshold value.

Next, the correction processing unit 114 causes the work vehicle 10 to travel backward until the work vehicle 10 reaches the position P6 or until the position deviation m1 of the work vehicle 10 with respect to the extended line of the straight route r5 is equal to or less than the position threshold value. It is noted that the target position of the position P6 is a position which is at a distance of m2 (for example, 2 m) from the turning end position P4.

Next, the correction processing unit 114 causes the work vehicle 10 to spin-turn (neutrally turn), for example, at the position P6 until the orientation deviation of the work vehicle 10 with respect to the direction of the extended line of the straight route r5 is equal to or less than the orientation threshold value. Next, the correction processing unit 114 causes the work vehicle 10 to travel straight from the position P6 to the turning end position P4 along the extended line of the straight route r5. After that, the travel processing unit 111 causes the work vehicle 10 to travel straight on the straight route r5 and enter the work route R1 of the crop row Vrb from the end point P0.

The work vehicle 10 executes the restricted operation (traveling slowly, stopping) and the correction operation every time the position deviation exceeds the position threshold value, for example. Therefore, when the position threshold value is uniformly fixed as in the conventional case, for example, in the case where the farm field F slopes, the position deviation frequently exceeds the position threshold value, so that the restricted operation and the correction operation are repeatedly executed. This causes a problem that the work efficiency of a spraying work with the work vehicle 10 is reduced.

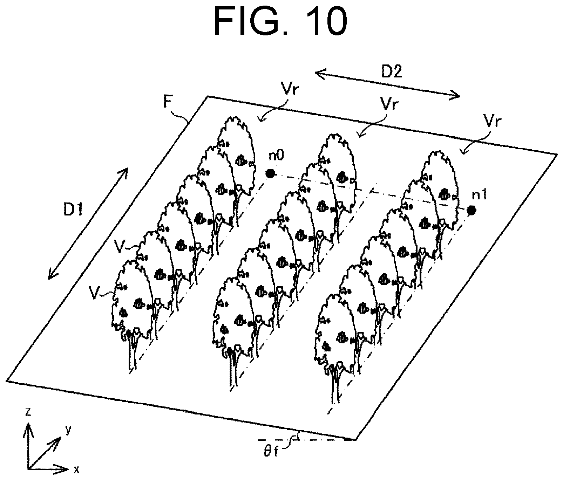

FIG. 10 illustrates an example of the sloped farm field F. The farm field F illustrated in FIG. 10 slopes by an angle Θf (slope angle) in the left-right direction (D2 direction) with respect to the movement direction (D 1 direction) of the work vehicle 10 in the farm field F. It is noted that the slope angle θf is calculated according to the following equation using the end points n0 (x0, y0, z0) and n1 (x1, y1, z1) of the crop rows Vr illustrated in FIG. 10. In other words, the vehicle control device 11 calculates the slope angle θf, based on the latitudes, longitudes, and altitudes of a plurality of points that specify the travel region of the work vehicle 10 in the farm field F.
[Math. 1]

$$\theta f = \tan^{-1}\left\{\frac{(z1 - z0)}{\sqrt{(x1 - x0)^2 + (y1 - y0)^2}}\right\} \quad \cdots \ (1)$$

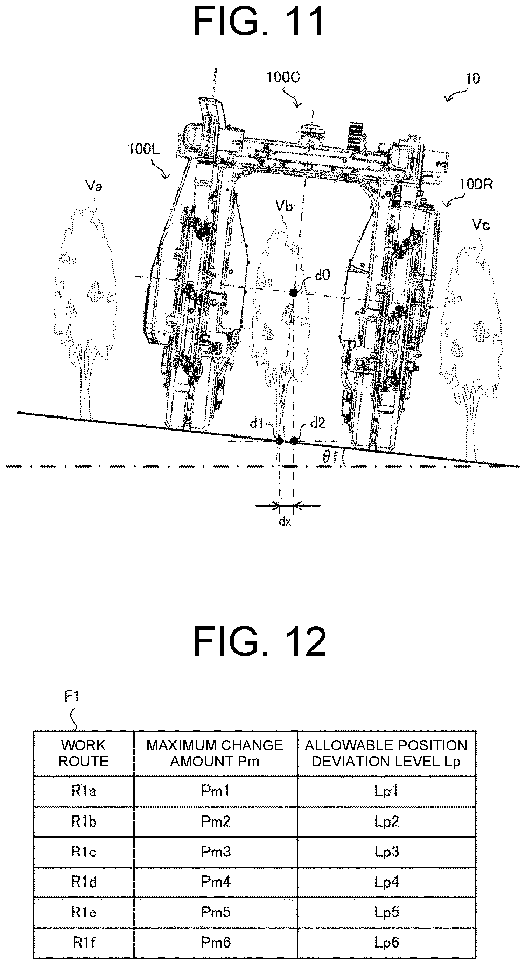

FIG. 11 illustrates the rear view of the work vehicle 10 traveling on a work passage of the farm field F on the slope illustrated in FIG. 10. In FIG. 11, reference numeral d0 indicates a reference point representing the current position of the work vehicle 10. Specifically, the reference point d0 is a position (position of the global coordinate system (NED coordinate system)) indicating the latitude, longitude, and altitude of the work vehicle 10 positioned by the positioning device 16. The reference point d0 is set at the position which is at a height of half the total height of the work vehicle 10 (an example of a predetermined height in the present invention) from the ground of the farm field F. Further, the position of the reference point d0 in the frontrear direction when the work vehicle 10 is viewed in a plane is a position half of the total length of the work vehicle 10. In other words, the reference point d0 is set at the center of the work vehicle 10 in the XYZ direction.

Further, in FIG. 11, reference numeral d1 indicates a position (target position) on the target route R, that is, a position of a crop Vc. Here, since the work vehicle 10 automatically travels along the target route R, for example, when the farm field F or the work route R1 does not slope (θf = 0 degrees), the reference point d0 and the target position d1 almost match. However, as illustrated in FIG. 11, if the farm field F or the work route R1 slopes, the position (latitude, longitude) of the reference point d0 deviates from the target position d1. Specifically, a distance dx from the target position d1 to a point d2 on which the reference point d0 is dropped in the vertical direction is the position deviation due to the slope angle θf.

Thus, even when the work vehicle 10 appropriately automatically travels in the work passage along the target route R, the position deviation dx increases due to the influence of the slope angle θf. As the slope angle θf is larger, the position deviation dx is larger. Therefore, the position deviation dx increases due to the influence of the slope angle θf, and the position threshold value is likely to be exceeded. This causes a problem that the restricted operation and the correction operation are likely to be executed in the work vehicle 10 and the work efficiency is reduced. It is noted that the slope angle θf is not limited to the slope angle of the entire farm field F (see FIG. 10), and may be the slope angle of each work route R1 (work passage). In other words, the slope angle in the present invention may be the slope angle of the farm field F or the slope angle of the work route R1. Each of the farm field F and the work route R1 is an example of the travel region in the present invention.

On the other hand, in the work vehicle 10 according to the present embodiment, as described below, it is possible to improve the work efficiency of the work with the work vehicle 10 traveling automatically in a sloped travel region (in the farm field F or on the work route R1).

Specifically, the setting processing unit 115 of the vehicle control device 11 sets a position threshold value for the position deviation dx of the work vehicle 10 with respect to the target route R, based on the slope angle θf. In other words, the setting processing unit 115 sets the position threshold value in consideration of the slope condition of the farm field F or the work route R1. The setting processing unit 115 is an example of a setting processing unit in the present invention.

For example, the setting processing unit 115 sets the position threshold value, based on travel history information of the work vehicle 10. Specifically, firstly, the setting processing unit 115 sets an initial value (position initial value) of the position deviation with respect to the work route R1. Next, the travel processing unit 111 causes the work vehicle 10 to perform a spraying work while automatically traveling according to the target route R in the farm field F (see FIG. 10) with the slope angle θf. While the work vehicle 10 travels automatically, the detection processing unit 112 calculates and records, for each of the plurality of work routes R1a to R1f (see FIG. 6) included in the target route R, a maximum change amount Pm of the position deviation with respect to the initial position value in the work route R1. Further, the detection processing unit 112 calculates, for each work route R1, an allowable position deviation level Lp corresponding to the maximum change amount Pm. The allowable position deviation level Lp is an index representing a level (stage) at which the position deviation is allowable and which does not require the above-mentioned deceleration operation and correction operation for the work route R1.

The detection processing unit 112 executes automatic travel and a spraying work, and stores, in the storage unit 12, position deviation information F1 recorded in association with the maximum change amount Pm and the allowable position deviation level Lp for each work route R1. FIG. 12 a table showing an example of the position deviation information F1.

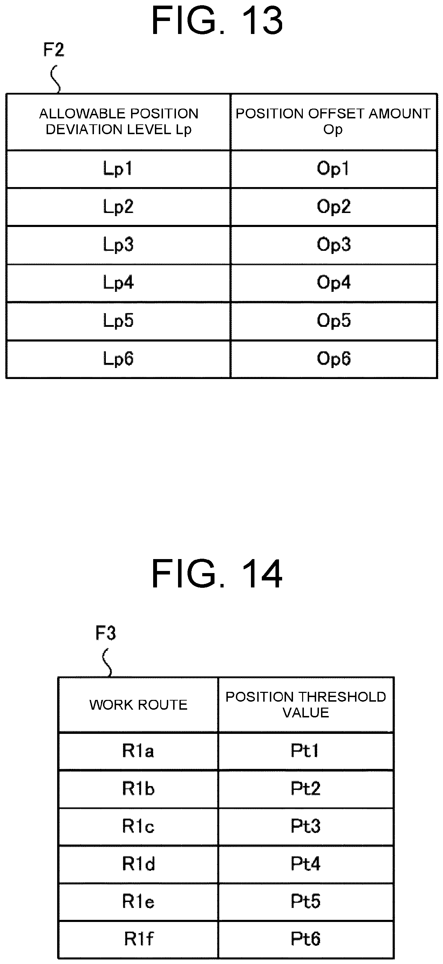

The setting processing unit 115 changes the previously set position threshold value, based on the past position deviation information F1 recorded by the detection processing unit 112. Specifically, the setting processing unit 115 determines a position offset amount Op with respect to the position threshold value for each work route R1. The position offset amount Op is the correction information of the previously set position threshold value. The storage unit 12 stores in advance position correction information F2 (see FIG. 13) indicating the position offset amount Op corresponding to the allowable position deviation level Lp. The setting processing unit 115 determines the position offset amount Op with respect to the position threshold value for each work route R1 by referring to the position correction information F2.

Then, the setting processing unit 115 sets a value obtained by adding or subtracting the position offset amount Op to or from the previously set position threshold value as a position threshold value for the next spraying work. For example, the setting processing unit 115 acquires the allowable position deviation level Lp1 for a work route P1a by referring to the position deviation information F1 which is the travel history information obtained when the work vehicle 10 traveled last time, acquires a position offset amount Op1 corresponding to the allowable position deviation level Lp1 by referring to the position correction information F2, and changes the previously set position threshold value by the position offset amount Op1. The setting processing unit 115 stores threshold value information F3 (see FIG. 14) indicating the changed position threshold value into the storage unit 12. Position threshold values Pt1 to Pt6 respectively corresponding to the work routes R1a to R1f are registered for the threshold value information F3.

It here should be noted that, since the configuration is employed in which the position threshold value is calculated by using the travel history information, factors such as the road surface condition of each work route R1 are involved in addition to the factor of the slope angle θf of the farm field F or the work route R1, and thus, a different position threshold value may be calculated for each work route R1.

As described above, the setting processing unit 115 changes the position threshold value for each work route R1, based on the position deviation with respect to the work route R1 for each work route R1 included in the travel history information for the farm field F or the work route R1 with the slope angle θf. Further, the setting processing unit 115 may change the position threshold value to a value different from each other depending on each work route R1.

It is noted that, in FIGS. 12 and 13, for convenience, the allowable position deviation level Lp and the position offset amount Op are indicated at six stages (Lp1 to Lp6, Op1 to Op6) according to the number of work routes, but in reality, may be represented at a previously set number of stages (for example, three stages).

The route data transferred from the operation terminal 20 includes information on the target route R, an area for storing the maximum change amount Pm, and an area for storing the allowable position deviation level Lp. Further, in the route data transferred from the operation terminal 20, the allowable position deviation level Lp is set to the lowest value (the level at which the allowable deviation is equivalent to 0). The vehicle control device 11 causes the work vehicle 10 to automatically travel based on the route data, calculates the allowable position deviation level Lp to update the route data. Accordingly, the threshold value information F3 (see FIG. 14) is associated with the route data and stored in the storage unit 12. The position correction information F2 may be stored in the storage unit 12 in advance, or may be included in the route data transferred from the operation terminal 20. The travel processing unit 111 executes the next automatic travel and spraying work, based on the route data including the target route R and the threshold value information F3.

In another embodiment, the setting processing unit 115 may change, based on the travel history information of the work vehicle 10, the previously set position threshold value for each farm field F. For example, the detection processing unit 112 calculates one maximum change amount Pm and one allowable position deviation level Lp for all work routes R1a to R1f. Thus, the setting processing unit 115 determines one position offset amount Op for the farm field F and sets the position threshold value.

In the above example, the maximum change amount of the position deviation is used, but in another embodiment, a probability statistical method may be used to utilize a method of calculating the allowable position deviation level Lp, based on variance values of position deviations.

As described above, the setting processing unit 115 sets the position threshold value, based on the slope angle θf of the farm field F or the work route R1. For example, the setting processing unit 115 sets the position threshold value to a first position threshold value for the slope angle Θf being a first angle, and sets the position threshold value to a second position threshold larger than the first position threshold value for the slope angle Θf being a second angle larger than the first angle. Further, the setting processing unit 115 sets the position threshold value to a larger value as the slope angle θf is larger.

The restriction processing unit 113 executes the restricted operation for restricting the travel operation of the work vehicle 10, based on the position threshold value set by the setting processing unit 115. For example, the restriction processing unit 113 determines whether the position deviation detected by the detection processing unit 112 exceeds the position threshold value of the threshold value information F3 (see FIG. 14), and when the position deviation exceeds the position threshold value, the restriction processing unit 113 executes the restricted operation for restricting the travel operation (traveling slowly, stopping, etc.) of the work vehicle 10. For example, the restriction processing unit 113 reduces the traveling vehicle speed of the work vehicle 10 with a predetermined deceleration and then stops the work vehicle 10. Further, when the work vehicle 10 is stopped, the correction processing unit 114 executes the correction operation to correct the position deviation (see FIG. 9).

With the above configuration, the position threshold value of the position deviation can be changed, and thus, it is possible to avoid unnecessary restricted operation and correction operation of the work vehicle 10 due to the slope of the farm field F or the work route R1. Therefore, it is possible to improve the work efficiency of the spraying work of the work vehicle 10. Further, it is possible to use the history information obtained by actually traveling in the farm field F, and thus, it is possible to set the position threshold value to an appropriate value suitable for the farm field F. Therefore, it is also possible to improve the work accuracy.

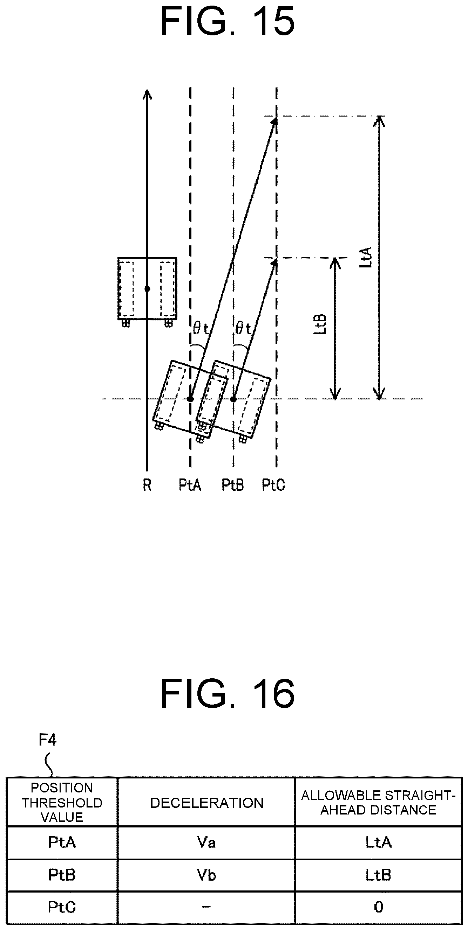

Here, when the setting processing unit 115 changes the position threshold value to a value larger than a previously set value, the restriction processing unit 113 may set the deceleration of the work vehicle 10 during the restricted operation to a value larger than the initial setting deceleration. FIG. 15 is a diagram schematically illustrating a relationship between the position threshold value and the deceleration.

FIG. 15 illustrates three types of position threshold values PtA, PtB, and PtC (where PtA < PtB < PtC) for the target route R. The position threshold value PtA indicates the position threshold value at the initial setting, the position threshold value PtB indicates the position threshold value after change, and the position threshold value PtC indicates the position threshold value for executing the stop operation. In the initial setting, when the position deviation exceeds the position threshold value PtA, the work vehicle 10 travels slowly with a first deceleration. Further, if the work vehicle 10 travels slowly with an orientation deviation θt and the first deceleration, the work vehicle 10 stops when the position deviation exceeds the position threshold value PtC. In this case, the work vehicle 10 travels by a distance LtA from the start of deceleration to the stop. It is noted that the angle θt is a threshold value for the orientation deviation.

On the other hand, for example, if the setting processing unit 115 changes the position threshold value from PtA to PtB, the work vehicle 10 travels slowly with a second deceleration when the position deviation exceeds the position threshold value PtB. Then, if the work vehicle 10 travels slowly with an orientation deviation θt and the second deceleration, the work vehicle 10 stops when the position deviation exceeds the position threshold value PtC. In this case, the work vehicle 10 travels by a distance LtB (allowable straight-ahead distance) from the start of deceleration to the stop. In other words, the work vehicle 10 decelerates to stop at the distance LtB (allowable straight-ahead distance) after the position deviation exceeds the position threshold value PtB. Thus, the restriction processing unit 113 sets the second deceleration to a value larger than the first deceleration.

In this way, when the position deviation exceeds the first position threshold value PtA, the restriction processing unit 113 causes the work vehicle 10 to travel slowly with the first deceleration Va, and when the position deviation exceeds the second position threshold value PtB (where PtA < PtB), the restriction processing unit 113 causes the work vehicle 10 to travel slowly with the second deceleration Vb (where Vb > Va). FIG. 16 shows an example of deceleration information F4 regarding deceleration. For example, when the setting processing unit 115 sets the position threshold value PtB, the restriction processing unit 113 acquires the deceleration Vb corresponding to the position threshold value PtB by referring to the deceleration information F4, and sets, to Vb, the deceleration for the work vehicle 10 to travel slowly. The deceleration information F4 can be calculated in advance through simulation, a test obtained by an actual machine, or the like.

With the above configuration, for example, the setting processing unit 115 sets the position threshold value PtA (corresponding to a first threshold value in the present invention) for the slope angle θf of the farm field F being the first angle, and when the position deviation exceeds the position threshold value PtA, the restriction processing unit 113 causes the work vehicle 10 to travel slowly with the deceleration Va. Further, the setting processing unit 115 sets the position threshold value PtB (PtA< PtB) (corresponding to a second threshold value in the present invention) for the slope angle θf of the farm field F being the second angle larger than the first angle, and when the position deviation exceeds the position threshold value PtB, the restriction processing unit 113 causes the work vehicle 10 to travel slowly with the deceleration Vb (Vb > Va). Thus, when the position deviation of the work vehicle 10 exceeds the position threshold value, the work vehicle 10 can be safely stopped regardless of the slope angle θf of the farm field F.

It is noted that, in the present embodiment, the deceleration corresponding to each of the position threshold values Pt1 to Pt6 registered in the threshold value information F3 (see FIG. 14) is registered in the deceleration information F4.

In addition, the work vehicle 10 executes deceleration and stop operations not only when the position deviation exceeds the position threshold value but also when an obstacle is detected. Specifically, when the position deviation exceeds the position threshold value or when the work vehicle 10 detects an obstacle while the work vehicle 10 travels automatically, the setting processing unit 115 causes the work vehicle 10 to travel slowly with the predetermined deceleration. Here, when the work vehicle 10 detects an obstacle, it is necessary to avoid a collision with the obstacle. In this respect, the setting processing unit 115 sets the deceleration of the work vehicle 10 when the obstacle detection device 17 detects an obstacle to a value larger than the deceleration of the work vehicle 10 obtained when the position deviation exceeds the position threshold value. For example, when the position deviation exceeds the position threshold value while the work vehicle 10 travels automatically, the setting processing unit 115 causes the work vehicle 10 to travel with the deceleration V1 (corresponding to a third deceleration in the present invention). Furthermore, when the work vehicle 10 detects an obstacle while traveling with the deceleration V1, the setting processing unit 115 switches the deceleration of the work vehicle 10 from the deceleration V1 to the deceleration V2 (V2 > V1) (corresponding to a fourth deceleration in the present invention). In this way, the work vehicle 10 gives priority to avoiding a collision with an obstacle by switching the deceleration when the obstacle is detected.

The above-described configuration of the work vehicle 10 is an example of the configuration of the work vehicle according to the present invention, and the present invention is not limited to the above-described configuration. The above-mentioned work vehicle 10 is a vehicle capable of performing the spraying work for spraying the spraying material to the first crop row Vr and the second crop row Vr in each of the left-right direction of the first crop row Vr while traveling across the first crop row Vr. In another embodiment, the vehicle body 100 of the work vehicle 10 may have a typical shape instead of the inverted U-shape, so that the vehicle body 100 entirely travels between the crop rows Vr (work passages). In this case, the work vehicle 10 automatically travels sequentially on each work passage, without spanning over the crop rows Vr. The spray device 14 is provided with one spraying unit and performs a spraying work while switching between a spraying pattern in which the chemical liquid is sprayed in both left and right directions, a spraying pattern in which the chemical liquid is sprayed only in the left direction, and a spraying pattern in which the chemical liquid is sprayed only in the right direction.

[Operation Terminal 20]

As illustrated in FIG. 2, the operation terminal 20 is an information processing device including a control unit 21, a storage unit 22, an operation display unit 23, and a communication unit 24. The operation terminal 20 may be composed of a mobile terminal such as a tablet terminal or a smartphone.

The communication unit 24 is a communication interface for connecting the operation terminal 20 to the communication network N1 in a wired or wireless manner to execute data communication according to a predetermined communication protocol between the operation terminal 20 and an external device such as one or more work vehicles 10 via the communication network N1.

The operation display unit 23 is a user interface including a display unit such as a liquid crystal display or an organic EL display that displays various types of information, and an operation unit such as a mouse, a keyboard, or a touch panel that receives an operation. On the operation screen displayed on the display unit, the operator can operate the operation unit to register various types of information (work vehicle information, farm field information, work information, etc., which will be described later). Further, the operator can operate the operation unit to give a work start instruction, a travel stop instruction, and the like to the work vehicle 10. At a place away from the work vehicle 10, the operator is capable of grasping the travel state, a work situation, and a surrounding situation of the work vehicle 10 automatically traveling according to the target route R within the farm field F, based on a travel trajectory displayed on the operation terminal 20 and a surrounding image of the vehicle body 100.

The storage unit 22 is a non-volatile storage unit, such as an HDD or an SSD, which stores various types of information. The storage unit 22 stores a control program such as an automatic traveling program for causing the control unit 21 to execute an automatic traveling process (see FIG. 17) described later. For example, the automatic traveling program is recorded non-temporarily on a computer-readable recording medium such as a CD or a DVD, and is stored in the storage unit 22 after being read by a predetermined reading device (not illustrated). It is noted that the automatic traveling program may be downloaded from a server (not illustrated) to the operation terminal 20 via the communication network N1 and stored in the storage unit 22.

The control unit 21 includes control devices such as a CPU, a ROM, and a RAM. The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (working area) for various types of processes executed by the CPU. The control unit 21 controls the operation terminal 20 by causing the CPU to execute various types of control programs stored in advance in the ROM or the storage unit 22.

As illustrated in FIG. 2, the control unit 21 includes various types of processing units such as a setting processing unit 211, a route generation processing unit 212, and an output processing unit 213. The control unit 21 functions as the various types of processing units by causing the CPU to execute various types of processes according to the control programs. Some or all of the processing units may be configured by an electronic circuit. The control programs may be programs for causing a plurality of processors to function as the processing units.

The setting processing unit 211 sets and registers information on the work vehicle 10 (hereinafter referred to as work vehicle information), information on the farm field F (hereinafter referred to as farm field information), and information on work (here, a spraying work) (hereinafter, work information).

In the setting process of the work vehicle information, the setting processing unit 211 sets information about the model of the work vehicle 10, the position where the antenna 164 is attached in the work vehicle 10, kinds of the work machine (here, the spraying device 14), the size and the shape of the work machine, the position of the work machine relative to the work vehicle 10, a vehicle speed and an engine RPM of the work vehicle 10 during working, a vehicle speed and an engine RPM of the work vehicle 10 during turning, and the like as a result of the operator operating for registering such information on the operation terminal 20. In the present embodiment, information about the spray device 14 is set as the information of the working machine.

In the setting process of the farm field information, the setting processing unit 211 sets information about the position and the shape of the farm field F, the work start position S to start the work and the work end position G to end the work (see FIG. 6), a working direction, and the like, as a result of the operator operating for registering such information on the operation terminal 20. The working direction means a direction in which the work vehicle 10 travels while performing the spraying work by the spray device 14 in the working area which is the area excluding the non-work region such as the headland from the farm field F.

It is possible to automatically obtain the information about the position and the shape of the farm field F when the operator manually causes the work vehicle 10 to encircle along the outer perimeter of the farm field F, for example, and a transition of the position information of the antenna 164 at that time is recorded. It is also possible to obtain the position and the shape of the farm field F, based on a polygon obtained by the operator operating the operation terminal 20 in a state where a map is displayed on the operation terminal 20 and designating a plurality of points on the map. A region designated by the obtained position and shape of the farm field F is a region (travel region) where the work vehicle 10 can travel.

In the setting process of the work information, as the work information, the setting processing unit 211 is configured to be set with a skipped number being the number of work routes to be skipped if the work vehicle 10 turns in the headland, a width of the headland, and the like.

The route generation processing unit 212 generates a target route R being a route on which the work vehicle 10 automatically travels, based on each of the setting information. The target route R is, for example, a route from the work start position S to the work end position G (see FIG. 6). The target route R illustrated in FIG. 6 includes a linear work route R1 for spraying the chemical liquid to the crop V in the region where the crop V is planted, and a movement route R2 for moving between the crop rows Vr without performing the spraying work.

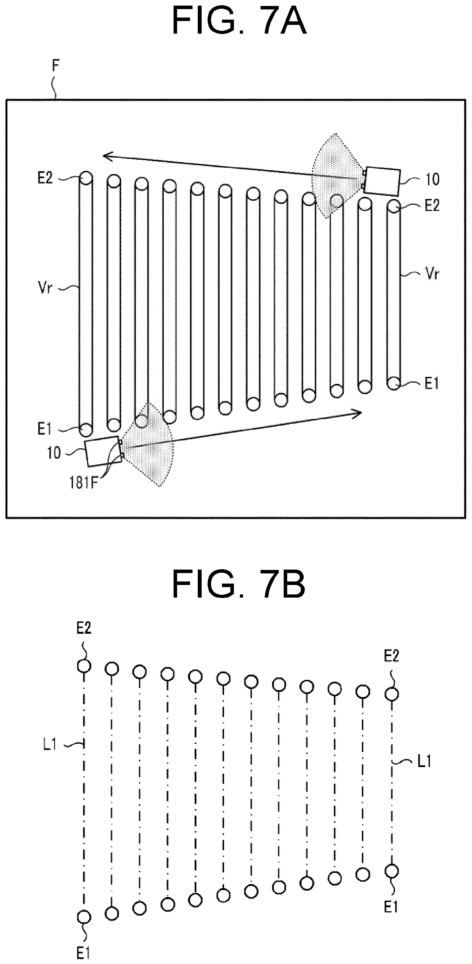

An example of a method of generating the target route R will be described with reference to FIGS. 7A and 7B. FIG. 7A schematically illustrates the crop rows Vr. Firstly, the operator manually causes the work vehicle 10 to travel along the outer perimeter of the crop rows Vr (see FIG. 7A). While traveling, the work vehicle 10 detects end points E1 on one side (lower side in FIG. 7A) and end points E2 on the other side (upper side in FIG. 7A) of the crop rows Vr, and acquires position information (coordinates) of each of the end points E1 and E2. The end points E1 and E2 may be positions of crops V that are already planted, or may be positions of target objects indicating positions of crops V that are to be planted. When acquiring the position information (coordinates) of each of the end points E1 and E2 from the work vehicle 10, the route generation processing unit 212 sets lines L1 (see FIG. 7B) connecting corresponding ones of the end points E1 and E2 as work routes of the crop rows Vr, to generate the target route R including a plurality of the work routes and movement routes (turning routes). The method of generating the target route R is not limited to the method described above. The route generation processing unit 212 may store the generated target route R in the storage unit 22.

The output processing unit 213 outputs route data including the information of the target route R generated by the route generation processing unit 212 to the work vehicle 10. The route data includes an area for storing the maximum change amount Pm for each work route R1 and an area for storing the allowable position deviation level Lp. Further, an initial value (the lowest value at which the allowable deviation is equivalent to 0) is registered in the allowable position deviation level Lp of the route data. It is noted that the route data may include an area for storing information about the orientation deviation (maximum change amount, allowable orientation deviation level).

The output processing unit 213 may output the route data to a server (not illustrated). The server stores and manages a plurality of the route data acquired from each of the plurality of operation terminals 20 in association with the operation terminal 20 and the work vehicle 10.

In addition to the above-described processes, the control unit 21 executes a process for causing the operation display unit 23 to display various types of information. For example, the control unit 21 causes the operation display unit 23 to display a registration screen for registering work vehicle information, farm field information, work information, and the like, an operation screen for generating the target route R, an operation screen for causing the work vehicle 10 to start automatic travel, a display screen for displaying a travel state of the work vehicle 10, and the like.

Further, the control unit 21 receives various types of operations from the operator. Specifically, the control unit 21 receives a work start instruction from the operator to cause the work vehicle 10 to start a work, a travel stop instruction to stop the traveling of the work vehicle 10 traveling automatically, and the like. When the control unit 21 receives each of the instructions, the control unit 21 outputs each of the instructions to the work vehicle 10.

When the vehicle control device 11 of the work vehicle 10 acquires the work start instruction from the operation terminal 20, the vehicle control device 11 starts the automatic traveling and a spraying work of the work vehicle 10. When the vehicle control device 11 acquires the travel stop instruction from the operation terminal 20, the vehicle control device 11 stops the automatic traveling and spraying work of the work vehicle 10.

The operation terminal 20 may be accessible to the website (agricultural support site) of the agricultural support service provided by the server via the communication network N1. In this case, the operation terminal 20 is capable of functioning as an operation terminal of the server as a result of the browser program being executed by the control unit 21.

[Automatic Traveling Process]

Hereinafter, an example of the automatic traveling process executed by the vehicle control device 11 of the work vehicle 10 will be described with reference to FIG. 17.

It is noted that the present invention may be regarded as an invention of an automatic traveling method in which one or more steps included in the automatic traveling process are executed. Further, one or more steps included in the automatic traveling process described herein may be omitted where appropriate. It is noted that each of the steps in the automatic traveling process may be executed in a different order as long as a similar operation and effect is obtained. Here, a case where each of steps in the automatic traveling process is executed by the vehicle control device 11 will be described by way of example, but another embodiment may be an automatic traveling method in which each of the steps in the automatic traveling process is executed in a distributed manner by one or more processors.

Firstly, the vehicle control device 11 sets a position threshold value depending on the slope angle $\theta f$ of the farm field F or the work route R1. For example, the vehicle control device 11 uses the previous travel history information to change the position threshold value to a value larger than a previously set value. The vehicle control device 11 stores route data including the target route R and the changed position threshold value (threshold value information F3 (see FIG. 14)). In the next work, the work vehicle 10 executes the automatic travel described below based on the route data.

In step S1, the vehicle control device 11 determines whether a work start instruction has been acquired from the operation terminal 20. For example, when an operator depresses a start button on the operation terminal 20, the operation terminal 20 outputs the work start instruction to the work vehicle 10. When the vehicle control device 11 acquires the work start instruction from the operation terminal 20 (S1: Yes), the process proceeds to step S2. The vehicle control device 11 waits until the work start instruction is acquired from the operation terminal 20 (S1: No).

In step S2, the vehicle control device 11 starts automatic travel. For example, when the vehicle control device 11 acquires the work start instruction from the operation terminal 20, the vehicle control device 11 starts automatic travel according to the target route R and the threshold value information F3 which are included in the route data.

Next, in step S3, the vehicle control device 11 acquires a position threshold value corresponding to the current position by referring to the threshold value information F3. For example, when the work vehicle 10 enters the work route R1a, the vehicle control device 11 acquires the position threshold value Pt1 corresponding to the work route R1a. Further, for example, when the work vehicle 10 enters the work route R1b, the vehicle control device 11 acquires the position threshold value Pt2 corresponding to the work route R1b.

Next, in step S4, the vehicle control device 11 determines whether the position deviation exceeds the position threshold value. Specifically, the vehicle control device 11 detects the position deviation dx (see FIG. 11) of the work vehicle 10 with respect to the target route R, based on the positioning information from the positioning device 16. Then, the vehicle control device 11 determines whether the detected position deviation dx exceeds the position threshold value acquired in step S3. When the position deviation dx exceeds the position threshold value (S4: Yes), the process proceeds to step S41. When the position deviation dx is equal to or less than the position threshold value (S4: No), the process proceeds to step S5.

In step S41, the vehicle control device 11 causes the work vehicle 10 to travel slowly. For example, the vehicle control device 11 acquires the deceleration corresponding to the position threshold value by referring to the deceleration information F4 (see FIG. 16), and sets, to the acquired deceleration, the deceleration of the work vehicle 10 to travel slowly. The vehicle control device 11 also causes the work vehicle 10 to travel slowly with the set deceleration and then stops the work vehicle 10.

Next, in step S42, the vehicle control device 11 executes the correction operation to correct the position deviation dx of the work vehicle 10. For example, the vehicle control device 11 corrects the posture of the work vehicle 10 by performing neutral turn and backward travel as illustrated in FIG. 9. After performing the correction operation, the vehicle control device 11 returns to step S3 to restart the automatic travel and spraying work and execute the above-mentioned determination process.

In step S5, the vehicle control device 11 determines whether the work vehicle 10 has ended the work. The vehicle control device 11 determines that the work has been ended when the position of the work vehicle 10 matches the work end position G. When the work vehicle 10 has ended the work (S5: Yes), the automatic traveling process ends. The vehicle control device 11 repeats the determination process in step S4 and the correction operation until the work vehicle 10 ends the work, and continues the automatic travel.

As described above, the automatic traveling system 1 according to the present embodiment causes the work vehicle 10 to automatically travel according to the target route R in the travel region (for example, in the farm field F, on the work route R1), and when the position deviation of the work vehicle 10 with respect to the target route R exceeds the position threshold value, the automatic traveling system 1 executes the restricted operation (deceleration, stop) to restrict the automatic travel of the work vehicle 10. The automatic traveling system 1 also sets the position threshold value, based on the slope angle $\theta f$ in the left-right direction (horizontal direction) with respect to the movement direction of the work vehicle 10 in the travel region. Further, in the automatic traveling method according to the present embodiment, one or more processors executes causing the work vehicle 10 to automatically travel according to a target route R in a travel region, executing, if a position deviation of the work vehicle 10 with respect to the target route R exceeds a position threshold value, a restricted operation for restricting automatic travel of the work vehicle 10, and setting the position threshold value, based on the slope angle $\theta f$ in a left-right direction with respect to a movement direction of the work vehicle 10 in the travel region. Further, in a threshold value setting method according to the present embodiment includes changeably setting the position threshold value corresponding to the position deviation, based on the slope angle $\theta f$ in the left-right direction with respect to the movement direction of the work vehicle 10 in the travel region.

With the above configuration, a threshold value for the position deviation (position threshold value) can be set depending on the slope angle $\theta f$ of the travel region (farm field F, work route R1). Thus, the work vehicle 10 can automatically travel for each farm field F with a different slope angle $\Theta f$ by using the position threshold value for the farm field F, or can automatically travel for each work route R1 with a different slope angle $\theta f$ in the farm field F by using the position threshold value for the work route R1. In addition, the position threshold value for the slope angle $\Theta f$ being larger than 0 degrees is set to a value larger than the position threshold value for the slope angle $\Theta f$ being 0 degrees, so that the position deviation can be less likely to exceed the position threshold value. Thus, it is possible to prevent restricted operations such as deceleration and stop from being repeatedly executed. Therefore, it is possible to improve the work efficiency of the work with the work vehicle 10 traveling automatically in a sloped travel region. It is noted that, since the work vehicle 10 can detect an obstacle (for example, a crop V) by the obstacle detection device 17, it is possible to prevent the vehicle from colliding with an obstacle due to the position deviation caused by the slope even when the position threshold value is changed to a value larger than a previously set value.

The present invention is not limited to the embodiments described above. Other embodiments of the present invention will be described.

In another embodiment, when the work vehicle 10 travels in a sloped travel region, the vehicle control device 11 may correct the detected position deviation dx, based on the slope angle $\theta f$. For example, in FIG. 11, the vehicle control device 11 subtracts $H \times \cos(\theta f)$ from the detected position deviation dx where the height of the reference point d0 is H to calculate the resulting value as the position deviation to be determined with the position threshold value. When the calculated position deviation exceeds the position threshold value, the vehicle control device 11 executes the restricted operation and the correction operation.

With this configuration, the influence of the slope of the travel region can be excluded, so that it is possible to prevent restricted operations such as deceleration and stop from being repeatedly executed in the work vehicle 10 traveling automatically in a sloped travel region as in the above-described embodiment, thereby making it possible to improve the work efficiency of the work.

Further, in the above-described embodiment, the setting processing unit 115 changes the position threshold value, based on the travel history information (position deviation information F1) of the work vehicle 10. On the other hand, in another embodiment, the setting processing unit 115 may set the position threshold value, based on the slope angle $\theta f$ of the farm field F. Specifically, as illustrated in FIG. 10, if the farm field F slopes by the angle $\theta f$ in the horizontal direction (direction in which the crop rows are arranged), the setting processing unit 115 calculates the allowable position deviation level, based on the slope angle $\theta f$.

For example, the setting processing unit 115 creates a map function from test data obtained by an actual machine or test data obtained through simulation in advance, and calculates the allowable position deviation level depending on the slope angle Of by using the map function. Then, the setting processing unit 115 sets the position threshold value, based on the position offset amount Op corresponding to the calculated allowable position deviation level.

In this way, the setting processing unit 115 calculates the slope angle of the farm field F, based on altitude information (z coordinate information) indicating the altitude of the end point P0 of the work route R1.

With this configuration, the allowable position deviation level is calculated when the map of the farm field F is created, and thus, it is not necessary to calculate the maximum change amount Pm and the allowable position deviation level Lp during the automatic travel of the work vehicle 10. Therefore, it is possible to reduce the processing load of the work vehicle 10 during automatic travel.

It is noted that, in the above configuration, the control unit 21 of the operation terminal 20 may calculate the allowable position deviation level, determine the position offset amount Op corresponding to the calculated allowable position deviation level to set the position threshold value. In this case, the position correction information F2 is recorded in the storage unit 22 of the operation terminal 20. Further, the control unit 21 transfers the route data including the target route R and the position threshold value to the work vehicle 10.

Further, in another embodiment of the present invention, the setting processing unit 115 may set the position threshold value, based on the topsoil condition of the farm field F. Specifically, the setting processing unit 115 determines the slope state of the farm field F, based on an image captured by a camera (not illustrated) mounted on the work vehicle 10, a detection result of another external sensor (not illustrated), and the like, and dynamically sets the allowable position deviation level, based on the determination result. It is noted that, if the image captured by the camera is used, the setting processing unit 115 may calculate the allowable position deviation level from the image data by using a deep learning method (End to End learning).

Further, if the setting processing unit 115 uses a three-dimensional sensor as an external sensor, the setting processing unit 115 may measure the slope angle of a road surface, the unevenness of the road surface, and the like, and calculate the allowable position deviation level by using a conversion function set in advance. It is noted that, in the method using the external sensor, it is possible to dynamically set the position threshold value before the vehicle enters a crop row Vr without having traveled in the farm field F, and it is also possible to respond to sudden changes in road surface conditions from the previous travel.

REFERENCE SIGNS LIST

1       .Automatic traveling system

| | |
|---|---|
| 10 | Work vehicle |
| 11 | Vehicle control device |
| 111 | Travel processing unit |
| 112 | Detection processing unit |
| 113 | Restriction processing unit |
| 114 | Correction processing unit |
| 115 | Setting processing unit |
| 14 | Spray device |
| 16 | Positioning device |
| 17 | Obstacle detection device |
| 20 | Operation terminal |
| 211 | Setting processing unit |
| 212 | Route generation processing unit |
| 213 | Output processing unit |
| 40 | Base station |
| 50 | Satellite |
| F | Farm field (travel region) |
| d0 | Reference point |
| dx | Position deviation |
| F1 | Position deviation information |
| F2 | Position correction information |
| F3 | Threshold value information |
| F4 | Deceleration information |
| P0 | End point |
| R | Target route |
| R1 | Work route (travel region) |
| V | Crop |
| Vr | Crop row |
| Of | Slope angle |

**Claims**

1. An automatic traveling method comprising:

   causing a work vehicle (10) to automatically travel according to a target route (R) in a travel region (F), said travel region (F) slopes by an slope angle ($\theta$f) in a left-right direction with respect to a movement direction of the work vehicle (10) in the travel region (F);
   **characterised by**
   executing, if a position deviation of the work vehicle (10) with respect to the target route (R) exceeds a threshold value, a restricted operation for restricting automatic travel of the work vehicle (10); and
   setting the threshold value, based on the slope angle ($\theta$f) of the travel region (F).

2. The automatic traveling method according to claim 1, wherein a distance between the target route (R) and a position of a reference point representing a current position of the work vehicle (10), the position depending on the slope angle, is calculated as the position deviation.

3. The automatic traveling method according to claim 2, wherein the reference point is set at a position which is at a predetermined height from a lower end of the work vehicle (10).

4. The automatic traveling method according to any one of 1 to 3, wherein the threshold value is set to a first threshold value for the slope angle ($\theta$f) being a first angle, and the threshold value is set to a second threshold value larger than the first threshold value for the slope angle ($\theta$f) being a second angle larger than the first angle.

5. The automatic traveling method according to claim 4, further comprising:

   causing, if the position deviation exceeds the first threshold value, the work vehicle (10) to travel at a reduced speed with a first deceleration; and
   causing, if the position deviation exceeds the second threshold value, the work vehicle (10) to travel at a reduced speed with a second deceleration larger than the first deceleration.

6. The automatic traveling method according to any one of claims 1 to 5, further comprising:

   causing, if the position deviation exceeds the threshold value or if the work vehicle (10) detects an obstacle while the work vehicle (10) travels automatically, the work vehicle (10) to travel at a reduced speed with a predetermined deceleration; and
   setting the deceleration of the work vehicle (10) when the obstacle is detected to a value larger than the deceleration of the work vehicle (10) when the position deviation exceeds the threshold value.

7. The automatic traveling method according to claim 6, further comprising:

   Causing the work vehicle (10) to travel with a third deceleration if the position deviation exceeds the threshold value while the work vehicle (10) travels automatically; and
   switching, if the work vehicle (10) detects the obstacle while traveling with the third deceleration, the deceleration of the work vehicle (10) from the third deceleration to a fourth deceleration larger than the third deceleration.

8. The automatic traveling method according to any one of claims 1 to 7, wherein the slope angle ($\theta$f) is calculated based on latitudes, longitudes, and altitudes of a plurality of points specifying the travel region.

9. An automatic traveling system (1) comprising:

   a travel processing unit (111) configured to cause a work vehicle 810) to automatically travel according to a target route (R) in a travel region (F), said travel region (F) slopes by an slope angle ($\theta$f) in a left-right direction with respect to a movement direction of the work vehicle (10) in the travel region (F) ;
   **characterised by** a restriction processing unit (113) configured to execute, if a position deviation of the work vehicle (10) with respect to the target route (R) exceeds a threshold value, a restricted operation for restricting automatic travel of the work vehicle (10); and
   a setting processing unit configured to set the threshold value, based on the slope angle ($\theta$f) of the travel region (F).

**10.** An automatic traveling program for causing one or more processors to execute:

causing a work vehicle (10) to automatically travel according to a target route (R) in a travel region (F), said travel region (F) slopes by an slope angle (θf) in a left-right direction with respect to a movement direction of the work vehicle (10) in the travel region (F);
**characterised by**
executing, if a position deviation of the work vehicle (10) with respect to the target route (R) exceeds a threshold value, a restricted operation for restricting automatic travel of the work vehicle (10); and
setting the threshold value, based on the slope angle (θf) of the travel region (F).

**Patentansprüche**

**1.** Automatisches Fahrverfahren umfassend:

Veranlassen, dass ein Arbeitsfahrzeug (10) automatisch gemäß einer Zielroute (R) in einem Fahrbereich (F) fährt, wobei der Fahrbereich (F) um einen Neigungswinkel (θf) in einer Links-Rechts-Richtung in Bezug auf eine Bewegungsrichtung des Arbeitsfahrzeugs (10) in dem Fahrbereich (F) geneigt ist;
**gekennzeichnet durch**
Ausführen, wenn eine Positionsabweichung des Arbeitsfahrzeugs (10) in Bezug auf die Zielroute (R) einen Schwellenwert überschreitet, eines eingeschränkten Betriebs zur Einschränkung der automatischen Fahrt des Arbeitsfahrzeugs (10); und
Einstellen des Schwellenwerts auf der Grundlage des Neigungswinkels (θf) des Fahrbereichs (F).

**2.** Automatisches Fahrverfahren nach Anspruch 1, wobei ein Abstand zwischen der Zielroute (R) und einer Position eines Referenzpunkts, der eine aktuelle Position des Arbeitsfahrzeugs (10) darstellt, wobei die Position von dem Neigungswinkel abhängt, als Positionsabweichung berechnet wird.

**3.** Automatisches Fahrverfahren nach Anspruch 2, wobei der Referenzpunkt an einer Position festgelegt ist, die sich in einer vorbestimmten Höhe von einem unteren Ende des Arbeitsfahrzeugs (10) befindet.

**4.** Automatisches Fahrverfahren nach einem der Ansprüche 1 bis 3, wobei der Schwellenwert auf einen ersten Schwellenwert eingestellt ist, wenn der Neigungswinkel (θf) ein erster Winkel ist, und der Schwellenwert auf einen zweiten Schwellenwert eingestellt ist, der größer als der erste Schwellenwert, wenn der Neigungswinkel (θf) ein zweiter Winkel ist, der größer als der erste Winkel ist.

**5.** Automatisches Fahrverfahren nach Anspruch 4, das ferner umfasst:

Veranlassen, wenn die Positionsabweichung den ersten Schwellenwert überschreitet, dass das Arbeitsfahrzeug (10) mit einer reduzierten Geschwindigkeit mit einer ersten Verzögerung fährt; und
Veranlassen, wenn die Positionsabweichung den zweiten Schwellenwert überschreitet, dass das Arbeitsfahrzeug (10) mit einer reduzierten Geschwindigkeit mit einer zweiten Verzögerung fährt, die größer als die erste Verzögerung ist.

**6.** Automatisches Fahrverfahren nach einem der Ansprüche 1 bis 5, das ferner umfasst:

Veranlassen, wenn die Positionsabweichung den Schwellenwert überschreitet oder wenn das Arbeitsfahrzeug (10) ein Hindernis erkennt, während das Arbeitsfahrzeug (10) automatisch fährt, dass das Arbeitsfahrzeug (10) mit einer reduzierten Geschwindigkeit mit einer vorbestimmten Verzögerung fährt; und
Einstellen der Verzögerung des Arbeitsfahrzeugs (10), wenn das Hindernis erkannt wird, auf einen Wert, der größer ist als die Verzögerung des Arbeitsfahrzeugs (10), wenn die Positionsabweichung den Schwellenwert überschreitet.

**7.** Automatisches Fahrverfahren nach Anspruch 6, das ferner umfasst:

Veranlassen, dass das Arbeitsfahrzeug (10) mit einer dritten Verzögerung fährt, wenn die Positionsabweichung den Schwellenwert überschreitet, während das Arbeitsfahrzeug (10) automatisch fährt; und
Umschalten, wenn das Arbeitsfahrzeug (10) das Hindernis während der Fahrt mit der dritten Verzögerung erkennt, der Verzögerung des Arbeitsfahrzeugs (10) von der dritten Verzögerung auf eine vierte Verzögerung, die größer als die dritte Verzögerung ist.

8. Automatisches Fahrverfahren nach einem der Ansprüche 1 bis 7,
wobei der Neigungswinkel ($\theta$f) auf der Grundlage von Breitengraden, Längengraden und Höhen einer Vielzahl von Punkten berechnet wird, die den Fahrbereich spezifizieren.

9. Automatisches Fahrsystem (1) umfassend:

eine Fahrverarbeitungseinheit (111), die konfiguriert zum Veranlassen, dass ein Arbeitsfahrzeug (10) automatisch gemäß einer Zielroute (R) in einem Fahrbereich (F) fährt, wobei der Fahrbereich (F) um einen Neigungswinkel ($\theta$f) in einer Links-Rechts-Richtung in Bezug auf eine Bewegungsrichtung des Arbeitsfahrzeugs (10) in dem Fahrbereich (F) geneigt ist;
**gekennzeichnet durch**
eine Beschränkungsverarbeitungseinheit (113), die konfiguriert zum Ausführen, wenn eine Positionsabweichung des Arbeitsfahrzeugs (10) in Bezug auf die Zielroute (R) einen Schwellenwert überschreitet, eines eingeschränkten Betriebs zur Einschränkung der automatischen Fahrt des Arbeitsfahrzeugs (10); und
eine Einstellungsverarbeitungseinheit, die konfiguriert ist zum Einstellen des Schwellenwerts auf der Grundlage des Neigungswinkels ($\theta$f) des Fahrbereichs (F).

10. Automatisches Fahrprogramm, das einen oder mehrere Prozessoren veranlasst, Folgendes auszuführen:

Veranlassen, dass ein Arbeitsfahrzeug (10) automatisch gemäß einer Zielroute (R) in einem Fahrbereich (F) fährt, wobei der Fahrbereich (F) um einen Neigungswinkel ($\theta$f) in einer Links-Rechts-Richtung in Bezug auf eine Bewegungsrichtung des Arbeitsfahrzeugs (10) in dem Fahrbereich (F) geneigt ist;
**gekennzeichnet durch**
Ausführen, wenn eine Positionsabweichung des Arbeitsfahrzeugs (10) in Bezug auf die Zielroute (R) einen Schwellenwert überschreitet, eines eingeschränkten Betriebs zur Einschränkung der automatischen Fahrt des Arbeitsfahrzeugs (10); und
Einstellen des Schwellenwerts auf der Grundlage des Neigungswinkels ($\theta$f) des Fahrbereichs (F).

**Revendications**

1. Procédé de déplacement automatique comprenant :

la provocation du déplacement automatique d'un véhicule de travail (10) selon un itinéraire cible (R) dans une région de déplacement (F), ladite région de déplacement (F) étant en pente suivant un angle de pente ($\theta$f) dans une direction gauche-droite par rapport à une direction de mouvement du véhicule de travail (10) dans la région de déplacement (F) ;
**caractérisé par**
si un écart de position du véhicule de travail (10) par rapport à l'itinéraire cible (R) dépasse une valeur seuil, l'exécution d'une opération de restriction pour retreindre le déplacement automatique du véhicule de travail (10) ; et
le réglage de la valeur seuil sur la base de l'angle de pente ($\theta$f) de la région de déplacement (F).

2. Procédé de déplacement automatique selon la revendication 1, dans lequel une distance entre l'itinéraire cible (R) et une position d'un point de référence représentant une position actuelle du véhicule de travail (10) est calculée en tant qu'écart de position, la position dépendant de l'angle de pente.

3. Procédé de déplacement automatique selon la revendication 2, dans lequel le point de référence est réglé à une position qui se trouve à une hauteur prédéterminée par rapport à une extrémité inférieure du véhicule de travail (10).

4. Procédé de déplacement automatique selon l'une des revendications 1 à 3, dans lequel la valeur seuil est réglée à une première valeur seuil pour l'angle de pente ($\theta$f) qui est un premier angle, et la valeur seuil est réglée à une deuxième valeur seuil plus importante que la première valeur seuil pour l'angle de pente ($\theta$f) qui est un deuxième angle plus grand que le premier angle.

**5.** Procédé de déplacement automatique selon la revendication 4, comprenant en outre :

si l'écart de position dépasse la première valeur seuil, la provocation du déplacement du véhicule de travail (10) à une vitesse réduite suivant une première décélération ; et
si l'écart de position dépasse la deuxième valeur seuil, la provocation du déplacement du véhicule de travail (10) à une vitesse réduite selon une deuxième décélération plus importante que la première décélération.

**6.** Procédé de déplacement automatique selon l'une des revendications 1 à 5, comprenant en outre :

si l'écart de position dépasse la valeur seuil ou si le véhicule de travail (10) détecte un obstacle pendant que le véhicule de travail (10) se déplace automatiquement, la provocation du déplacement du véhicule de travail (10) à une vitesse réduite suivant une décélération prédéterminée ; et
le réglage de la décélération du véhicule de travail (10), lorsque l'obstacle est détecté, à une valeur plus importante que la décélération du véhicule de travail (10) lorsque l'écart de position dépasse la valeur seuil.

**7.** Procédé de déplacement automatique selon la revendication 6, comprenant en outre :

la provocation du déplacement du véhicule de travail (10) avec une troisième décélération si l'écart de position dépasse la valeur seuil pendant que le véhicule de travail (10) se déplace automatiquement ; et
si le véhicule de travail (10) détecte l'obstacle pendant qu'il se déplace avec la troisième décélération, la commutation de la décélération du véhicule de travail (10) de la troisième décélération à une quatrième décélération plus importante que la troisième décélération.

**8.** Procédé de déplacement automatique selon l'une des revendications 1 à 7, dans lequel l'angle de pente ($\theta$f) est calculé sur la base des latitudes, longitudes et altitudes d'une pluralité de points spécifiant la région de déplacement.

**9.** Système de déplacement automatique (1) comprenant :

une unité de traitement des déplacements (111) configurée pour amener un véhicule de travail (810) à se déplacer automatiquement selon un itinéraire cible (R) dans une région de déplacement (F), ladite région de déplacement (F) étant en pente suivant un angle de pente ($\theta$f) dans une direction gauche-droite par rapport à une direction de mouvement du véhicule de travail (10) dans la région de déplacement (F) ;
**caractérisé par**
une unité de traitement de restriction (113) configurée pour exécuter, si un écart de position du véhicule de travail (10) par rapport à l'itinéraire cible (R) dépasse une valeur seuil, une opération de restriction pour retreindre le déplacement automatique du véhicule de travail (10) ; et
une unité de traitement des réglages configurée pour régler la valeur seuil sur la base de l'angle de pente ($\theta$f) de la région de déplacement (F).

**10.** Programme de déplacement automatique pour amener un ou plusieurs processeurs à exécuter :

la provocation du déplacement automatique d'un véhicule de travail (10) selon un itinéraire cible (R) dans une région de déplacement (F), ladite région de déplacement (F) étant en pente suivant un angle de pente ($\theta$f) dans une direction gauche-droite par rapport à une direction de mouvement du véhicule de travail (10) dans la région de déplacement (F) ;
**caractérisé par**
si un écart de position du véhicule de travail (10) par rapport à l'itinéraire cible (R) dépasse une valeur seuil, l'exécution d'une opération de restriction pour retreindre le déplacement automatique du véhicule de travail (10) ; et
le réglage la valeur seuil sur la base de l'angle de pente ($\theta$f) de la région de déplacement (F).

# FIG. 1

# FIG. 2

1

**20** — OPERATION TERMINAL

**21** — CONTROL UNIT

**211** — SETTING PROCESSING UNIT

**212** — ROUTE GENERATION PROCESSING UNIT

**213** — OUTPUT PROCESSING UNIT

**22** — STORAGE UNIT

**23** — OPERATION DISPLAY UNIT

**24** — COMMUNICATION UNIT

**N1** —

**10** — WORK VEHICLE

**11** — VEHICLE CONTROL DEVICE

**111** — TRAVEL PROCESSING UNIT

**112** — DETECTION PROCESSING UNIT

**113** — RESTRICTION PROCESSING UNIT

**114** — CORRECTION PROCESSING UNIT

**115** — SETTING PROCESSING UNIT

**12** — STORAGE UNIT

**13** — TRAVEL DEVICE

**14** — SPRAY DEVICE

**15** — COMMUNICATION UNIT

**16** — POSITIONING DEVICE

**161** — POSITIONING CONTROL UNIT

**162** — STORAGE UNIT

**163** — COMMUNICATION UNIT

**164** — ANTENNA

**17** — OBSTACLE DETECTION DEVICE

# FIG. 3

# FIG. 4A

FRONT ⟵⟶ REAR

# FIG. 4B

REAR ⟵⟶ FRONT

# FIG. 4C

# FIG. 5

# FIG. 6

# FIG. 7A

# FIG. 7B

# FIG. 8

# FIG. 9

# FIG. 10

# FIG. 11

# FIG. 12

| WORK ROUTE | MAXIMUM CHANGE AMOUNT Pm | ALLOWABLE POSITION DEVIATION LEVEL Lp |
|---|---|---|
| R1a | Pm1 | Lp1 |
| R1b | Pm2 | Lp2 |
| R1c | Pm3 | Lp3 |
| R1d | Pm4 | Lp4 |
| R1e | Pm5 | Lp5 |
| R1f | Pm6 | Lp6 |

# FIG. 13

F2

| ALLOWABLE POSITION DEVIATION LEVEL Lp | POSITION OFFSET AMOUNT Op |
|---|---|
| Lp1 | Op1 |
| Lp2 | Op2 |
| Lp3 | Op3 |
| Lp4 | Op4 |
| Lp5 | Op5 |
| Lp6 | Op6 |

# FIG. 14

F3

| WORK ROUTE | POSITION THRESHOLD VALUE |
|---|---|
| R1a | Pt1 |
| R1b | Pt2 |
| R1c | Pt3 |
| R1d | Pt4 |
| R1e | Pt5 |
| R1f | Pt6 |

# FIG. 15

# FIG. 16

F4

| POSITION THRESHOLD VALUE | DECELERATION | ALLOWABLE STRAIGHT-AHEAD DISTANCE |
|---|---|---|
| PtA | Va | LtA |
| PtB | Vb | LtB |
| PtC | – | 0 |

# FIG. 17

```
              ┌─────────────┐
              │    START    │
              └─────────────┘
                     │
                     ▼
No        ◇ IS WORK START          ◇  S1
   ◄──────  INSTRUCTION ACQUIRED?
                     │ Yes
                     ▼
          ┌──────────────────────────┐  S2
          │  START AUTOMATIC TRAVEL   │
          └──────────────────────────┘
                     │
                     ▼
          ┌──────────────────────────┐  S3
          │ ACQUIRE POSITION THRESHOLD VALUE │
          └──────────────────────────┘
                     │
                     ▼
          ◇ DOES POSITION           ◇  S4      Yes
            DEVIATION EXCEED POSITION      ─────────┐
            THRESHOLD VALUE?                        │
                     │ No                           ▼
                     ▼                    ┌──────────────────┐  S41
          ◇ IS WORK ENDED? ◇  S5          │ EXECUTE SLOW TRAVEL │
    No   ◄──────                          └──────────────────┘
                     │ Yes                         │
                     ▼                             ▼
              ┌─────────────┐          ┌──────────────────────┐  S42
              │     END     │          │  EXECUTE CORRECTION   │
              └─────────────┘          │     OPERATION         │
                                       └──────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011320085 A1

- JP 2018041359 A